# EUROPÄISCHE PATENTSCHRIFT

(11) **EP 2 929 621 B1**
(45) Veröffentlichungstag und Bekanntmachung des Hinweises auf die Patenterteilung: **15.08.2018**
(21) Anmeldenummer: 13807957.9
(22) Anmeldetag: 06.12.2013
(51) Int. Cl.: H02K 15/03, H02K 1/27, H02K 1/17

(54) **ELEKTRISCHE MASCHINE SOWIE VERFAHREN ZU IHRER HERSTELLUNG**
ELECTRIC MACHINE AND METHOD FOR PRODUCING SAME
MOTEUR ÉLECTRIQUE ET PROCÉDÉ DE FABRICATION

(30) Priorität: 06.12.2012 DE 102012023868
(43) Veröffentlichungstag der Anmeldung: 14.10.2015
(73) Patentinhaber: Volkswagen Aktiengesellschaft, 38440 Wolfsburg (DE)
(72) Erfinder: BEHRENDT, Reiner, Nico, 39539 Havelberg (DE)
(74) Vertreter: Gulde & Partner
(86) Internationale Anmeldenummer: PCT/EP2013/075779
(87) Internationale Veröffentlichungsnummer: WO 2014/086966

(56) Entgegenhaltungen:
- DE-A1-102007 063 307
- DE-A1-102008 023 999
- BEHRENDT N ET AL: "Morphology and electret behaviour of microcellular high glass temperature films", APPLIED PHYSICS A; MATERIALS SCIENCE & PROCESSING, SPRINGER, BERLIN, DE, Bd. 85, Nr. 1, 1. August 2006 (2006-08-01) , Seiten 87-93, XP019424444, ISSN: 1432-0630, DOI: 10.1007/S00339-006-3660-7 in der Anmeldung erwähnt
- SUN H ET AL: "Microcellular foams from polyethersulfone and polyphenylsulfone - Preparation and mechanical properties", EUROPEAN POLYMER JOURNAL, PERGAMON PRESS LTD. OXFORD, GB, Bd. 38, Nr. 12, 1. Dezember 2002 (2002-12-01), Seiten 2373-2381, XP004389372, ISSN: 0014-3057, DOI: 10.1016/S0014-3057(02)00149-0 in der Anmeldung erwähnt

## Beschreibung

Die Erfindung betrifft eine Elektrische Maschine, umfassend einen Stator mit einem Statorkern und einen Rotor mit einem Rotorkern, wobei der Stator- und/oder der Rotorkern eine Mehrzahl von Magnettaschen (Magnetaufnahmen) umfasst, in welchen jeweils zumindest ein Permanentmagnet angeordnet und mit dem Stator- und/oder dem Rotorkern über ein Verbindungsmaterial verbunden ist. Die Erfindung betrifft ferner ein Verfahren zur Herstellung einer solchen elektrischen Maschine.

Elektrische Maschinen (elektromechanische Wandler), beispielsweise elektrische Antriebsmotoren für Kraftfahrzeuge, Starter, Generatoren oder Starter-Generatoren, wandeln elektrische Energie in mechanische Energie (Motoren) beziehungsweise mechanische Energie in elektrische Energie (Generatoren) um. Diese elektromechanische Umwandlung beruht auf elektromagnetischer Induktion. Derartige elektrische Maschinen umfassen einen feststehenden Stator (auch Ständer oder Primärteil genannt), der nach einer häufigen Bauart einen Statorkern (Blechpaket) mit entsprechenden Drahtwicklungen umfasst sowie eine bewegliche Komponente (auch Läufer oder Sekundärteil genannt), die bei dem häufigsten Bautyp als Rotor ausgebildet ist, welcher drehbar in dem oder um den ringförmig ausgebildeten Stator gelagert ist und eine Vielzahl an Permanentmagneten aufweist. Dabei wird aufgrund des bewegten Magnetfeldes des Rotors ein Stromfluss in der Statorwicklung erzeugt (Generator) beziehungsweise aufgrund des durch den Stator erzeugten Magnetfeldes die mechanische Bewegung/Rotation des Rotors bewirkt (Motor). Umgekehrte Bautypen, bei denen der Rotor eine Wicklung und der Stator Magnete umfasst, sind ebenfalls bekannt.

Die Permanentmagnete des Rotors und/oder des Stators können einerseits radial freiliegend auf der, der jeweiligen anderen Komponente zugewandten Umlauffläche angeordnet sein oder in Langlöchern, die das Blechpaket in axialer Richtung durchsetzen, eingebracht sein. Im letztgenannten Fall sind die Magnete hinsichtlich der radialen Umlauffläche nicht freiliegend, weswegen man auch von vergrabenen Magneten spricht. Für alle Bautypen, insbesondere im Falle vergrabener Magnete, ist aufgrund der großen auftretenden Kräfte, wie Zentrifugalkraft oder Anfahrmomente, die Befestigung der Magnete von enormer Bedeutung. Verbreitet ist das Befestigen der Magnete in den entsprechenden Aufnahmen (Taschen) durch Klebstoffe, wie Epoxidharze oder Silikonmaterialien (Silikonelastomere und -harze) oder silanmodifizierte Kleber. Bei diesen Klebern besteht jedoch die Gefahr, dass der Kleber die entsprechende Fügefläche der Magnetaufnahme des Rotors bzw. Stators nicht vollständig und gleichmäßig benetzt und somit keine gute Haftung zwischen Magnet und Blechpaket erhalten wird. Eine ungleichmäßige Haftung hat jedoch eine ungleichmäßig mechanische Belastung des Blechpakets zur Folge. Im schlimmsten Fall sind Deformationen des Blechpakets und Ablösungen des Magneten zu befürchten.

DE 10 2007 007 823 A1 beschreibt ein Verfahren zum Fixieren von vergrabenen Permanentmagneten in entsprechende Taschen eines Blechpakets eines Sekundärteils einer elektrischen Maschine, d.h. eines Rotors. Dabei wird der Magnet zunächst in die Tasche des Rotors eingesetzt, ein lichtaktivierbarerer Gießharz zum Zwecke seiner Aktivierung bestrahlt und anschließend in den verbleibenden Hohlraum der Tasche eingebracht, wo er aushärtet.

In US 2011/0057529 A1 wird ein Verfahren zur Befestigung von Permanentmagneten in entsprechende Aufnahmen eines Rotors einer elektrischen Maschine beschrieben. Hierzu wird der Magnet zunächst mit einer Beschichtung eines elastischen Materials versehen, dieser dann in die Aufnahme des Rotors eingebracht und schließlich darin fixiert. Die Fixierung kann insbesondere dadurch erfolgen, dass ein expandierbares Beschichtungsmaterial verwendet wird und das Gefüge mit Wärme oder einer Strahlung beaufschlagt wird. Alternativ kann die erforderliche Wärme auch durch eine exotherme Vernetzungsreaktion des polymeren Beschichtungsmaterials erzeugt werden.

Aus DE 10 2009 028 180 A1 ist ein Verfahren zur Befestigung von Permanentmagneten in Langlöchern oder auf der Oberfläche eines Rotors oder Stators einer elektrischen Maschine bekannt, bei dem der Magnet oder die entsprechende Fläche des Rotors bzw. Stators mit einem Klebstoff vorbeschichtet wird und - eventuell zeitlich oder örtlich getrennt von dem Beschichtungsschritt - der Magnet in die entsprechende Aufnahme des Rotors bzw. Stators gesetzt wird und anschließend der Klebstoff ausgehärtet wird. In einer Ausführung kann der Klebstoff ein chemisches oder physikalisches Treibmittel enthalten. Als Letzteres werden Füller in Form von Mikrohohlkugeln aus Kunststoff genannt.

Ein gänzlich anderes Konzept ist in DE 10 2008 027 759 A1 beschrieben. Hier besteht der Rotorkern aus einem Strangpresskörper. Dieser weist eine Vielzahl von Taschen zur Aufnahme von Permanentmagneten sowie von Hohlräumen zur Aufnahme eines Ferrofluids auf. Die Taschen und die Hohlräume sind miteinander verbunden, sodass die Magnete von dem Ferrofluid umspült werden. Nach der Magnetisierung der anfangs unmagnetisierten Magnete wird das Ferrofluid hochviskos bis fest und dient somit gleichzeitig als Klebemasse für die Permanentmagnete.

Bei dem in DE 10 2009 032 222 A1 beschriebenen Rotor einer elektrischen Maschine sind die Permanentmagnete nicht als fertige Bauteile auf oder in das Blechpaket montiert, sondern werden aus einem hartmagnetischen Fertigungsmaterial auf die Umlauffläche des Blechpakets durch einen thermischen Beschichtungsprozess oder Sprühkompaktierungsverfahren unmittelbar ausgebildet.

In DE 102 17 977 A1 werden die Permanentmagnete eines Rotors allein durch Klemmkräfte in den Taschen fixiert.

Es ist zudem bekannt, Polymere aufzuschäumen, indem diese unter hohem Druck mit einem inerten Gas wie Kohlendioxid beaufschlagt werden, wobei sich das Gas in dem Polymermaterial löst. In einem anschließenden Schritt wird der Gasdruck schlagartig abgelassen und die Temperatur schlagartig erhöht. Da das Gas dabei nicht sofort aus dem Polymer austritt, wirkt das Gas als Weichmacher im Polymer. Gleichzeitig setzt jedoch eine zunehmende Phasenseparation des Gases ein, sodass sich Poren im Polymer bilden. Durch die sinkende Gaskonzentration im Polymer wird daher auch die weichmachende Wirkung des Gases immer geringer. Dies führt dazu, dass trotz der während des Schäumungsprozesses vorliegenden relativ hohen Temperatur, die Porenstruktur "eingefroren" wird. Da bei diesem Prozess das Gas keine chemische Reaktion eingeht, wird das Verfahren auch als physikalisches Aufschäumen bezeichnet. Daneben sind auch chemische Aufschäumverfahren bekannt, wobei das Polymer mit einer chemischen Substanz compoundiert wird, welche das eigentliche Treibgas beispielsweise infolge einer Temperaturerhöhung freisetzt.

Sun et al. beschreiben das Aufschäumen von Polyethersulfon (PES) und Polyphenylsulfon (PPSU) mittels CO₂ als physikalisches Treibgas zur Herstellung mikrozellulärer Schaumstrukturen (Eur. Polymer J. 38 (2002) 2373-2381). Dabei wird das Polymer bei Drücken von 810-820 psi (ca. 56 bar) bei Raumtemperatur für 70 h mit CO₂ gesättigt, anschließend für eine halbe Stunde an Luft gelagert, ehe die Aufschäumung des Polymers in einem heißen Ölbad bei variablen Temperaturen erfolgt.

Bei einem ähnlichen Verfahren erfolgt die CO₂-Sättigung von dünnen Folien aus Polyetherimid (PEI) oder Polyetheretherketon (PEEK) bei 65 bar und Raumtemperatur für 24 h und das Aufschäumen zwischen zwei heißen Metallplatten (Behrendt et al., Appl. Phys. A 85 (2006) 87-93).
Krause et al. haben den Einfluss der CO₂-Beladung auf die Porenstruktur von PEI- und PES-Folien untersucht (Macromolecules 34 (2001) 8792-8801). Dabei wurden für beide Polymere bei Beladungen bis zu 50 cm³ CO₂ pro cm³ Polymer geschlossene, mikrozelluläre Porenstrukturen erhalten, während bei höheren Beladungen offene, nanoporöse Porenstrukturen erhalten wurden.
Der Effekt unterschiedlicher Temperaturen während des Aufschäumens von Folien aus Polysulfon (PSU), PES und zyklischem Olefin-Copolymer (COC) wurde von Krause et al. (Macromolecules 34 (2001) 874-884) untersucht. Dabei wurde gefunden, dass zunehmende Aufschäumtemperaturen zu abnehmenden Zelldichten der Schäume führen. DE 102007 007 823 A1 beschreibt ein Montageverfahren zum Einpassen eines Permanentmagneten in ein Halteelement, wobei der Permanentmagnet durch einen expansionsfähigen Beschichtungsstoff gehaltert wird, wobei der zumindest eine Permanentmagnet vor dem Einpassen zunächst zumindest teilweise mit einem elastischen Beschichtungsstoff beschichtet und in einem nachfolgenden Schritt in das Halteelement montiert wird.

In DE 10 2008 023 999 A1 wird eine Vorrichtung zur Halterung eines Magneten in einem Rotor einer elektrischen Maschine vorgeschlagen, wobei in einem Blechpaket eines Elektromotors eine Haltetasche vorhanden ist, in die ein Magnet eingesetzt ist, der mittels eines Klebemittels befestigt ist, das sich beim Aushärten in einem vorbestimmten Ausmaß ausdehnt und das ein Treibmittel zum Aufschäumen eines Klebstoffs enthält.

Der Erfindung liegt die Aufgabe zugrunde, ein Verfahren zur Herstellung einer elektrischen Maschine insbesondere zum Fixieren von Permanentmagneten an einem Rotor- und/oder Statorkern, vorzuschlagen, bei dem die Magnete mit hoher Reproduzierbarkeit sicher und gleichmäßig befestigt werden. Es soll zudem eine entsprechende elektrische Maschine zur Verfügung gestellt werden, bei der die Permanentmagnete mit hoher Festigkeit und Gleichmäßigkeit mit dem Rotor- und/oder Statorkern verbunden sind.
Diese Aufgabe wird durch eine elektrische Maschine sowie durch ein Verfahren mit den Merkmalen der unabhängigen Ansprüche 1 und 7 gelöst.
Somit betrifft ein erster Aspekt der Erfindung eine elektrische Maschine, die einen Stator mit einem Statorkern und einen Rotor mit einem Rotorkern umfasst. Der Statorkern und/oder der Rotorkern umfasst eine Mehrzahl von Magnettaschen (Magnetaufnahmen), in welchen jeweils zumindest ein Permanentmagnet angeordnet ist und dieser mit dem Stator- beziehungsweise dem Rotorkern über ein Verbindungsmaterial ("Magnetkleber") verbunden ist. Erfindungsgemäß umfasst das Verbindungsmaterial ein aufgeschäumtes Polymer bzw. besteht aus einem solchen. Dabei wird unter einem aufgeschäumten Polymer ein Polymermaterial verstanden, das - zumindest in seinem Kernbereich - eine Schaumstruktur aufweist, das heißt offene und/oder geschlossene Poren aufweist, deren Wände aus dem Polymermaterial gebildet sind. Der überwiegend aus Polymerschaum bestehende Kernbereich des Verbindungsmaterials, weist eine Porosität von zumindest 10 Vol.-% auf, das heißt höchstens 90 % des Gesamtvolumens werden durch das Polymermaterial ausgefüllt und wenigstens 10 % des Gesamtvolumens sind als Hohlraum ausgebildet. Vorzugsweise beträgt die Porosität des aufgeschäumten Polymers zumindest 20 Vol.-%. Die Durchmesser der Schaumporen liegen vorzugsweise im Bereich zwischen 0,01 µm bis 500 µm, bevorzugt zwischen 1 µm bis 100 µm.

Die äußere Oberfläche des Verbindungsmaterials ("Magnetkleber") ist vorzugsweise als überwiegend kompakte, also im Wesentlichen nicht-poröse Deckschicht (Haut) ausgebildet. Die Deckschicht des Polymerschaums besteht vorzugsweise aus einer festen kompakten Polymerschicht, deren Dicke über die Transferzeit (Zeitfenster nach Entspannen und vor Aufschäumen) eingestellt werden kann. Die Dicke der überwiegend kompakten Deckschicht liegt bevorzugt zwischen 0,01 µm bis 1000 µm, besonders bevorzugt zwischen 1 µm und 500 µm. Durch die kompakte Deckschicht wird die Gesamtporosität des Verbindungsmaterials vermindert. Die Deckschicht ist vorteilhaft, um ein Eindiffundieren von z.B. Getriebeöl oder Salzwasser in die Verbindungs- bzw. Klebeschicht zu vermeiden, da sonst die Gefahr einer Magnetkorrosion besteht.

Durch die Ausbildung der Verbindung zwischen den Magneten und dem Stator- und/oder Rotorkern durch einen Polymerschaum wird eine besonders gleichmäßige, gut haftende und reproduzierbare Befestigung der Magnete erzielt.

Vorzugsweise ist das aufgeschäumte Polymer durch Aufschäumen eines entsprechend aufschäumbaren Polymers im zusammengefügten Zustand des Permanentmagnets innerhalb der Magnettasche erzeugt. Auf diese Weise wird ein weitgehend vollständiges Ausfüllen des verbleibenden Hohlraums ("Spalts") zwischen Magnet und der Magnettasche mit dem Polymerschaum und damit eine besonders gute Haftung zwischen Magnet und Magnettasche erzielt, da der Spalt durch die Treibwirkung des Expansionsmittels vollständig gefüllt wird und die zunächst noch weiche und noch mit Expansionsmittel gesättigte Polymermasse besonders gut in die Kavitäten des Spalts eindringen kann.

Durch die Ausfüllung der Magnettasche mit dem aufgeschäumten Polymer wird eine Reibschlussverbindung zwischen dem Permanentmagnet und dem Stator- beziehungsweise Rotorkern erzielt. Sofern die Tasche Hinterschneidungen aufweist, kann hier zusätzlich eine Verbindung durch Formschluss hervorgerufen werden. Abhängig von der Wahl des Polymers kann zusätzlich oder alternativ zu dem genannten Verbindungskräften auch eine Klebeverbindung durch Haftung zwischen dem Permanentmagnet und dem Statorbeziehungsweise Rotorkern bestehen. Insbesondere durch das Zusammenspiel zwischen Reibschluss und Haftung wird eine besonders sichere Befestigung der Magnete erzielt.

Neben der Eignung, aufgeschäumt werden zu können, ist eine hohe Temperaturbeständigkeit des Polymermaterials wünschenswert, weswegen vorzugsweise Hochtemperaturpolymere Einsatz finden, worunter vorliegend Polymere mit einer Schmelztemperatur von mindestens 170 °C verstanden werden. Vorzugsweise ist das Polymer daher ausgewählt aus der Gruppe bestehend aus Polyphenylensulfid (PPS), Polyethersulfon (PES), Polyetherimid (PEI), Polysulfon (PSU), Polyetheretherketon (PEEK), Cycloolefine-Copolymere (COC), Polyacrylnitril (PAN), Acrylnitril-Butadien-Styrol-Copolymeren (ABS), Polycarbonaten (PC), mit physikalischen Treibmitteln schäumbare Fluorpolymere, Polystyrole, sowie Derivate, Mischungen und Copolymere von diesen. Von diesen sind PPS, PES, PEI sowie PEEK besonders bevorzugt, deren Strukturen unten dargestellt sind. Ganz besonders bevorzugt ist PPS, das sich einerseits als Isolierwerkstoff für elektrische Maschinen hervorragend eignet und andererseits neben seinen guten elektrischen Eigenschaften eine hohe Schmelztemperatur (297 °C), eine sehr geringe Feuchtigkeitsaufnahme sowie eine gute chemische Beständigkeit, beispielsweise gegenüber Getriebeöl zeigt. Zudem ist PPS sehr gut verschäumbar. PES weist ähnliche Eigenschaften wie PPS auf, ist jedoch geringfügig schlechter verschäumbar als dieses. PEI ist hinsichtlich seiner elektrischen Eigenschaften dem PPS sogar etwas überlegen, weist jedoch eine etwas höhere Feuchtigkeitsaufnahme als dieses auf und ist relativ teuer. PEEK weist einen sehr hohen Schmelzpunkt auf und besitzt zudem ausgezeichnete mechanische Eigenschaften. Es zeigt jedoch eine vergleichsweise mäßige Verschäumbarkeit und ist zudem sehr teuer.

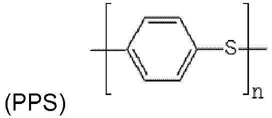

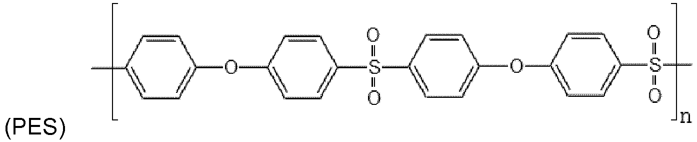

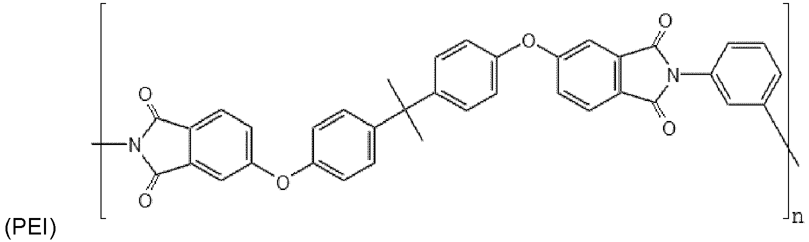

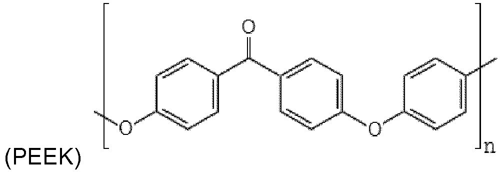

Vorteilhaft für die Verschäumbarkeit ist, wenn sich die verwendeten Polymere in einem bestimmten Temperaturbereich (*thermo-plastisch*) verformen lassen. Dieser Vorgang sollte zudem reversibel sein, das heißt er kann durch Abkühlung und Wiedererwärmung bis in den schmelzflüssigen Zustand beliebig oft wiederholt werden, solange nicht durch Überhitzung die sogenannte thermische Zersetzung des Materials einsetzt. Da dies ein charakteristisches Merkmal von Thermoplasten ist, ist besonders bevorzugt, dass die Polymere thermoplastische Polymere, insbesondere solche der oben genannten Hochtemperaturpolymere, sind.

Die genannten Hochtemperaturpolymere können zusätzlich Additive, wie Füllstoffe, Nukleierungsmittel (z.B. Ruß, Graphit oder Talkum), sowie Additive zur Erhöhung der elektrischen Isolation oder Additive zur Erhöhung der thermischen Leitfähigkeit (z.B. hexagonles Bornitrid), sowie Glasfasern oder Kohlefasern enthalten.

Die Erfindung ist besonders vorteilhaft bei Bauarten, bei denen die Magnettaschen als Langlöcher im Stator- und oder Rotorkern ausgebildet sind, welche sich in axialer Richtung erstrecken und in Richtung einer radialen Umlauffläche des Stator- beziehungsweise des Rotorkerns geschlossen sind ("vergrabene Magnete"). Grundsätzlich lässt sich die erfindungsgemäße Befestigung der Magnete jedoch auch mit Vorteil bei Bautypen realisieren, bei denen die Magnettaschen als Vertiefungen auf der radialen Umlauffläche des Statorbeziehungsweise des Rotorkerns ausgebildet sind, d.h. die von außen aufgeklebt und freiliegend sind.

Der Statorkern und/oder der Rotorkern ist vorzugsweise als Blechpaket ausgebildet, das heißt er besteht aus einer Vielzahl von in axialer Richtung gestapelten und miteinander verbundenen Blechzuschnitten.

Die elektrische Maschine kann als Elektromotor ausgeführt sein, der elektrische Energie in mechanische Energie umwandelt, welche beispielsweise dem Antrieb eines Fahrzeugs dient. Alternativ kann die elektrische Maschine ein Generator sein, welcher ausgebildet ist, unter Verbrauch von mechanischer Energie elektrische Energie zu erzeugen. Ebenso ist eine kombinierte Ausbildung als Elektromotor/Generator möglich, welcher zwischen einem generatorischen und einem motorischen Betrieb umgeschaltet werden kann.

Darüber hinaus sind im Rahmen der vorliegenden Erfindungen sämtliche Bautypen elektrischer Maschinen umfasst, bei denen entweder der Rotor oder der Stator oder beide Permanentmagnete aufweisen. Zudem kann die elektrische Maschine als Rotationsmaschine ausgebildet sein, bei der die bewegliche Komponente als Rotor ausgestaltet ist, oder als Linearmaschine, bei der die bewegliche Komponente eine Linearbewegung ausführt. Ebenso sind im Falle einer Rotationsmaschine neben den am weitesten verbreiteten Innenläufern, bei denen der Rotor innerhalb des Stators rotierbar angeordnet ist, auch Außenläufer umfasst, bei denen der Rotor außen um den feststehenden Stator läuft.

Ein weiterer Aspekt der vorliegenden Erfindung betrifft ein Verfahren zu Herstellung einer elektrischen Maschine, wobei nach einer ersten Verfahrensvariante
a1) ein Permanentmagnet zumindest bereichsweise mit einem aufschäumbaren Polymermaterial beschichtet wird,
b1) der mit dem Polymermaterial beschichtete Permanentmagnet in eine Magnettasche des Stator- und/oder Rotorkerns eingebracht wird,
c) das Polymermaterial mit einem Treibmittel unter Druck über eine vorbestimmte Dauer beaufschlagt wird, sodass das Treibmittel sich in dem Polymermaterial löst, wobei dieser Schritt c) vor oder nach Schritt a1) oder nach Schritt b1) durchgeführt wird, und
d) eine Phasenseparation des Treibmittels und des Polymermaterials durch Druckverminderung und Temperaturerhöhung ausgelöst wird, sodass das sich ein aufgeschäumtes Polymermaterial ausbildet.

Gemäß dieser Variante werden somit die Magnete zunächst mit dem Polymermaterial beschichtet, in dieser Form in die Taschen des Stator- bzw. Rotorkerns eingebracht und dann aufgeschäumt. Für die Beschichtung der Magnete mit Polymermaterial kommen unterschiedliche weiter unten beschriebene Verfahren in Frage.

Nach einer alternativen Verfahrensvariante wird
a2) eine Magnettasche des Stator- und/oder Rotorkerns zumindest bereichsweise mit einem aufschäumbaren Polymermaterial beschichtet,
b2) ein Permanentmagnet in die mit dem Polymermaterial beschichtete Magnettasche des Stator- und/oder Rotorkerns eingebracht,
c) das Polymermaterial mit einem Treibmittel unter Druck über eine vorbestimmte Dauer beaufschlagt, sodass das Treibmittel sich in dem Polymermaterial löst, wobei dieser Schritt c) vor oder nach Schritt a2) oder nach Schritt b2) durchgeführt wird, und
d) eine Phasenseparation des Treibmittels und des Polymermaterials durch Druckverminderung und Temperaturerhöhung ausgelöst, sodass das sich ein aufgeschäumtes Polymermaterial ausbildet.

Gemäß dieser Verfahrensvariante werden somit die Magnettaschen zunächst mit dem Polymermaterial beschichtet (ausgekleidet), die Magnete eingesetzt und sodann das Polymermaterial aufgeschäumt.

Vorzugsweise wird die Druck- bzw. Temperaturänderung jeweils in Schritt d) abrupt, also möglichst schnell, vorgenommen. Auf diese Weise wird ein besonderes intensives Verschäumen erzielt.

Bei beiden der vorgenannten Verfahrensvarianten kann die Sättigung des Polymermaterials mit dem Treibmittel zu verschiedenen Stadien des Verfahrens erfolgen. Erstens kann die Beladung des noch unverarbeiteten Polymermaterials (z.B. als Folie, die noch nicht um den Magneten gewickelt wurde) erfolgen, bevor der Permanentmagnet oder die Magnettasche mit diesem beschichtet wird. In diesem Fall erfolgt die Beschichtung mit einem Polymermaterial, das bereits das gelöste Treibmittel enthält. Beispielsweise können Materialrollen des Polymermaterials mit dem Treibmittel beladen und bis zu ihrer weiteren Verarbeitung zwischengelagert werden. Alternativ kann die Beladung mit dem Treibmittel nach der Beschichtung des Magneten beziehungsweise der Magnettasche mit dem Polymermaterial erfolgen, bevor der Magnet in die Aufnahme/Tasche eingebracht wird. Schließlich kann die Beladung mit dem Treibmittel erfolgen, nachdem die Beschichtung des Permanentmagneten beziehungsweise der Magnettasche mit dem Polymermaterial und nachdem das Einbringen des Magneten in die Tasche erfolgt ist.

Bei dem erfindungsgemäßen Verfahren wird das Konzept der physikalischen Aufschäumung eingesetzt, bei dem das Treibmittel chemisch nicht reagiert. Insbesondere ist das Treibmittel ein Inertgas, wobei vorzugsweise Kohlendioxid oder Stickstoff, besonders bevorzugt Kohlendioxid eingesetzt wird. Publikationen, die sich mit dem physikalischen Aufschäumen verschiedener Polymere mittels CO₂ als physikalisches Treibgas befassen, wurden in der Beschreibungseinleitung bereits genannt. Die dort beschriebenen Verfahrensführungen können auf das vorliegende Verfahren ebenfalls angewandt werden.

Die Beladung des Polymermaterials mit dem Treibmittel erfolgt grundsätzlich unter Druck, wobei Drucke im Bereich von beispielsweise 20 bis 200 bar, insbesondere 30 bis 80 bar, vorzugsweise 40 bis 70 bar zum Einsatz kommen. Die Beladung kann beispielsweise in einem Autoklaven durchgeführt werden. Ferner kann die Beladung bei Raumtemperatur oder bei erhöhten Temperaturen erfolgen. Vorzugsweise wird sie bei Raumtemperatur durchgeführt. Die Beladungsbedingungen werden im Fall von Kohlendioxid vorzugsweise so gewählt, dass sich das CO₂ in einem nahkritischen Zustand befindet (der kritische Punkt für CO₂ liegt bei einer Temperatur von ca. 31 °C und einem Druck von ca. 74 bar). Abhängig von den Beladungsparametern, insbesondere von dem Druck erfolgt die Beladung üblicherweise über einen Zeitraum von mehreren Stunden, beispielsweise über 2 Stunden.

Die Beladung des Polymermaterials mit dem Treibmittel wird bevorzugt so durchgeführt, dass das Polymermaterial unter den gegebenen Bedingungen zumindest annähernd mit dem Treibmittel gesättigt ist. Insbesondere erfolgt das Lösen des Treibmittels in dem Polymermaterial zumindest bis 80 %, insbesondere zumindest bis 90 % der Sättigungsgrenze. Je höher die Sättigung ist, desto größer ist die erhaltene Porosität nach dem Aufschäumen.

Das Beschichten des Permanentmagneten oder der Magnettasche mit dem aufschäumbaren Polymermaterial kann auf unterschiedliche Weise erfolgen. Beispielsweise kann als aufschäumbares Polymermaterial eine Folie verwendet und diese auf das entsprechende Bauteil appliziert werden. Hier bietet sich an, den Magneten mit der Folie ein- oder mehrlagig zu umwickeln, wobei auch mehrere Wickelrichtungen miteinander kombiniert werden können. Wie vorstehend bereits ausgeführt, kann die Folie optional bereits vor ihrer Applikation auf das Bauteil mit dem Treibmittel beladen werden. Geeignete Folien, beispielsweise mit einer Foliendicke von etwa 100 µm sind beispielsweise von dem Hersteller Lipp-Terler GmbH unter verschiedenen Handelsbezeichnungen erhältlich (LITE P® (PPS), LITE S® (PES), LITE I® (PEI), LITE U® (PSU), LITE TK® und LITE K® (jeweils PEEK), LITE K6®, LITE TK_{mod}® und LITE TKT® (modifizierte PEEK-Materialien). Alternativ kann das Beschichten auch durch Spritzguss einer Schmelze des aufschäumbaren Polymermaterials auf den Permanentmagneten oder der Magnettasche erfolgen. Gemäß einer weiteren Alternative erfolgt das Beschichten durch Tauchen des zu beschichteten Bauteils in eine Lösung des aufschäumbaren Polymermaterials. Geeignete Lösungsmittel umfassen N-Methylpyrrolidon, N-Ethylpyrrolidon, γ-Butyrolacton, Tetrahydrofuran, chlorierte Kohlenwasserstoffe wie Dichlormethan und andere sowie deren Gemische. Für PPS, PES und PEI kommen insbesondere N-Methylpyrrolidon und N-Ethylpyrrolidon in Frage, wobei im Falle von PEI auch γ-Butyrolacton, gegebenenfalls im Gemisch mit Tetrahydrofuran oder Dichlormethan eingesetzt werden kann. PSU löst sich gut in Tetrahydrofuran, während für COC besonders verschiedene Cyclohexane geeignet sind. Selbstverständlich können Lösungen des Polymermaterials auch jede andere praktikable Weise auf das zu beschichtende Bauteil, beispielsweise durch Bestreichen oder Elektrosprayverfahren, aufgebracht werden.

Nach der Sättigung des Polymermaterials mit Treibmittel in Schritt c) erfolgt vorzugsweise zunächst eine Druckverminderung auf Umgebungsdruck, wobei insbesondere ein möglichst großer Druckgradient realisiert wird. Bevorzugt erfolgt ein schlagartiges Entspannen.

Üblicherweise ist nach der Druckentspannung das Treibmittel quasi-stabil in dem Polymermaterial gelöst, das heißt die Phasenseparation findet nicht spontan statt. Vielmehr wird diese vorzugsweise durch eine Temperaturerhöhung ausgelöst, wofür der zu erwärmende Bereich vorzugsweise räumlich begrenzt erhitzt wird. Zu diesem Zweck kann die Polymerschicht beispielsweise durch einen Infrarotwärmestrahler lokal erhitzt werden oder das Bauteil in einen Ofen oder Wärmebad eingebracht werden.

Bedingt durch das im Polymer gelöste Treibmittel sinkt die Erweichungstemperatur sehr stark ab. Durch das Entweichen des Treibmittels aus dem Polymer im Wege der Phasenseparation steigt die Erweichungstemperatur kontinuierlich an. Dadurch gewinnt das Polymer während der Expansion an Festigkeit und wird mit steigendem Treibmittelverlust mechanisch kontinuierlich stabiler. Besonders vorteilhaft ist bei diesem Verfahren, dass sich bei der Expansion eine geschlossene Polymerdeckschicht an den freiliegenden Bereichen ausbildet, da das Treibmittel zuerst aus der obersten Schicht entweicht. Die Deckschicht schäumt somit nicht oder nur wenig auf, sondern bildet sich kompakt aus, was das Eindringen von Flüssigkeiten in das Polymer unterdrückt und so auch den Magneten vor Umwelteinflüssen schützt. Bedingt durch die schnelle Erweichung während der Expansionsphase wird eine gute Haftung zwischen Statorbeziehungsweise Rotorkern und dem Magneten gewährleistet. Die gute Haftung wird durch die überwiegend raue Oberfläche des geschäumten Verbindungsmaterials noch verstärkt. Außerdem wirkt das geschäumte Verbindungsmaterial mechanisch dämpfend, was günstig ist, da die Magnete mechanische sehr empfindlich sind (Magnete neigen zum Zerspringen).

Die Erfindung wird nachfolgend in Ausführungsbeispielen anhand der zugehörigen Zeichnungen erläutert. Es zeigen:
- Figur 1: eine elektrische Maschine in einer stark schematisierten Darstellung (axiale Draufsicht);
- Figur 2: einen Rotor in axialer Draufsicht;
- Figur 3: ein Fließdiagramm eines Verfahrens zur Herstellung eines Rotors eines Elektromotors sowie die entsprechenden Verfahrensstufen am Bauteil;
- Figur 4: rasterelektronenmikroskopische Aufnahmen aufgeschäumter Polymerfolien und Fotografien bzw. rasterlelektronenmikroskopische Aufnahmen von Bruchkanten von geschäumten Folien (PPS (A), PSU (B)),
- Figur 5: Fotografie eines Blechpakets mit Verbindungs- bzw. Klebeschicht aus geschäumten PPS und fixiertem Magnet in der Mitte. Der Kantenlänge (oben, längs) des Blechpakets beträgt 4 cm.

Nachfolgend soll die vorliegende Erfindung am Beispiel einer als Elektromotor ausgeführten permanenterregten elektrischen Maschine erläutert werden, deren Rotor vergrabene Permanente enthält. Es versteht sich jedoch, dass die erfindungsgemäße Befestigung der Magnete auch im Zusammenhang mit Magneten eines Stators oder mit anderen Maschinen, insbesondere Generatoren, Einsatz finden kann.

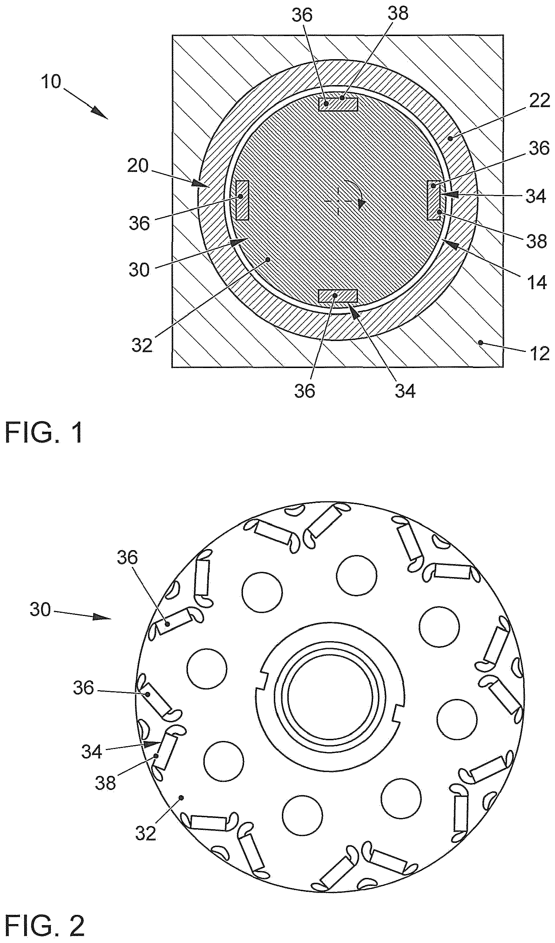

Der prinzipielle Aufbau eines insgesamt mit 10 bezeichneten Elektromotors wird anhand der Figur 1 erläutert, welche eine schematische axiale Draufsicht zeigt. Der Elektromotor 10 weist ein Gehäuse 12 auf, in welchem ein feststehender, insgesamt mit 20 bezeichneter Stator montiert ist. Der Stator 20 umfasst einen Statorkern 22, der insbesondere als Blechpaket ausgebildet ist, das heißt als ein Stapel in axialer Richtung gestapelter Blechzuschnitte. Gemäß der Darstellung in Figur 1 ist somit das oberste Blech des Blechpakets 22 sichtbar. Der Stator 20 umfasst ferner eine hier nicht dargestellte Statorwicklung, die mehrere Teilwicklungen umfasst, welche beispielsweise in axial verlaufende Nuten des Statorkerns 22 angeordnet sind. Typischerweise sind die Wicklungen aus durchgehend isolierbeschichtetem Kupferdraht hergestellt.

Der Elektromotor 10 weist ferner einen insgesamt mit 30 bezeichneten Rotor auf, der hier als Innenläufer ausgebildet ist und somit innerhalb des Stators 20 rotierbar auf einer hier nicht dargestellten Welle drehfest angeordnet ist. Zwischen einer Umlauffläche des Rotors 30 und des Stators 20 befindet sich ein Luftspalt 14.

Der Rotor 30 umfasst einen Rotorkern 32, der ebenso wie der Statorkern 22 als Blechpaket einer Vielzahl von axial gestapelten und laminierten Einzelblechen, beispielweise aus Stahl, besteht. Der Rotorkern 32 weist eine Mehrzahl von Magnettaschen 34 auf, die in Form von Langlöchern ausgebildet sind, die das Blechpaket des Rotorkerns 32 axial durchsetzen. Dabei sind die Magnettaschen 34 entlang des äußeren Umfangs des Rotorkerns 32 gleichmäßig verteilt angeordnet. In jeder Magnettasche 34 ist jeweils ein Permanentmagnet 36 angeordnet. Dabei weisen die Permanentmagnete 36 abwechselnde Polaritäten auf. Während in Figur 1 lediglich exemplarisch vier Permanentmagnete 36 dargestellt sind, können selbstverständlich auch mehr Magnete vorhanden sein.

Die Permanentmagnete 36 sind über ein Verbindungsmaterial 38 mit dem Rotorkern 32 verbunden. Erfindungsgemäß handelt es sich bei dem Verbindungsmaterial 38 um ein aufgeschäumtes Polymermaterial, insbesondere einem Hochtemperaturpolymer wie Polyphenylensulfid (PPS), Polyethersulfon (PES), Polyetherimid (PEI), Polyetheretherketon (PEEK) oder andere.

Eine detailliertere axiale Draufsicht einer speziellen Rotorausführung ist in Figur 2 dargestellt, wobei für übereinstimmende Elemente die gleichen Bezugszeichen wie in Figur 1 verwendet werden. In diesem Beispiel weist der Rotor insgesamt 16 Permanentmagnete 36 auf, die jeweils paarweise entlang des äußeren Umfangs des Rotorkerns 32 in den Aufnahmen (Taschen) 34 angeordnet sind. Dabei weisen die Magnete 36 einen radialen Anstellwinkel gegenüber der Umlauffläche auf.

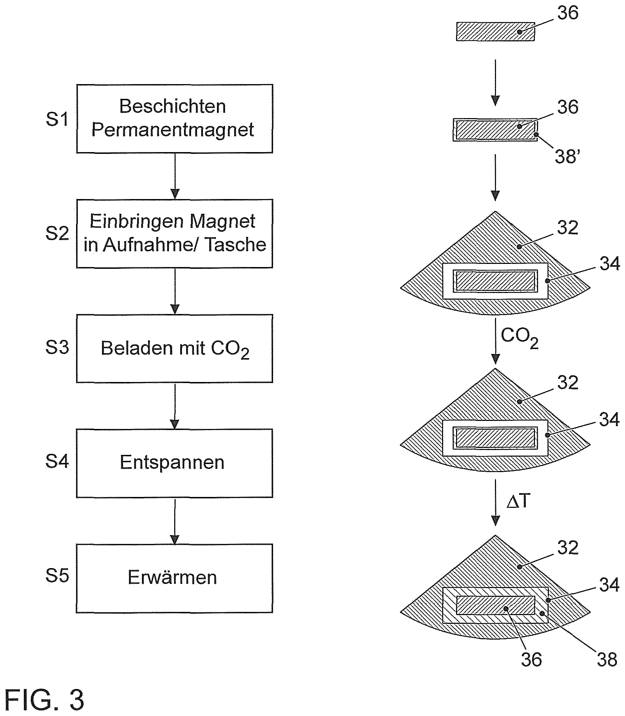

Nachfolgend soll ein Verfahren zur Herstellung einer elektrischen Maschine 10, insbesondere ihres Rotors 30, speziell zur Befestigung der Permanentmagnete 36 in den Magnettaschen 34, erläutert werden. Hierzu zeigt Figur 3 ein Fließschema (linke Seite) sowie den Verfahrensfortschritt anhand der entsprechenden Bauteile (rechte Seite).

In einem Schritt S1 erfolgt das Beschichten eines Permanentmagneten 36 mit einer dünnen Schicht eines aufschäumbaren Polymermaterials 38'. Beispielsweise wird zu diesem Zweck der Magnet 36 mit einer 100 µm dicken Folie aus Polyphenylensulfid (PPS) mehrfach und mit unterschiedlichen Wicklungsrichtungen umwickelt. In einem anschließenden Schritt S2 wird der mit dem Polymer 38' beschichtete beziehungsweise umwickelte Magnet 36 in eine Aufnahme/Tasche 34 des nur ausschnittsweise gezeigten Rotorkerns (Blechpakets) 32 eingebracht. Erkennbar verbleibt zwischen dem Magneten 36 mit der Polymerschicht 38' und dem Rotorkern 32 ein nicht ausgefüllter verbleibender Hohlraum innerhalb der Aufnahme/Tasche 34.

Anschließend erfolgt in Schritt S3 eine Beaufschlagung des Polymermaterials 38' mit nahkritischem Kohlendioxid CO₂. Hierzu wird der gesamte Rotorkern 32 mitsamt der Magnete 36 in eine geeignete Druckvorrichtung eingebracht, beispielsweise in einen Autoklaven. Nach Verschließen des Autoklaven wird ein Ventil einer an den Autoklaven angeschlossenen CO₂-Druckgasflasche geöffnet, um den Autoklaven mit CO₂ zu fluten. Die Sättigung des Polymermaterials 38' mit CO₂ erfolgt beispielsweise bei einem Sättigungsdruck von 40 bar bei Raumtemperatur über eine Dauer von 24 Stunden.

Anschließend erfolgt in Schritt S4 eine schlagartige Druckabsenkung durch Öffnen des Autoklaven (Entspannen). Hierbei wird noch kein Aufschäumen des Polymermaterials 38' beobachtet.

Zum Auslösen des Aufschäumens wird in Schritt S5 das Polymermaterial 38' erwärmt. Dies kann beispielsweise durch lokales Anstrahlen mit Infrarotwärmestrahlung erfolgen, durch Einbringen des gesamten Bauteils in einem Ofen oder durch Einbringen in ein Wärmebad, beispielsweise ein Ölbad. Infolge der Temperaturerhöhung kommt es zu einer Phasenseparation zwischen dem Polymermaterial 38' und dem Kohlendioxid, welches aus dem Polymermaterial 38' entweicht und somit eine Porenbildung verursacht. Hierdurch kommt es auch zu einer Expansion des Polymermaterials 38', so dass dieses aufschäumt und schließlich die gesamte Aufnahme (Tasche) 34 des Rotorkerns 32 ausfüllt. Im Ergebnis liegt das Polymermaterial 38' als Polymerschaum 38 vor und gewährleistet eine feste Haftung zwischen Magnet und Tasche.

In Abweichung zu der in Figur 3 gezeigten Verfahrensführung kann das Beladen (Sättigen) des aufschäumbaren Polymermaterials 38' mit CO₂ auch an einer früheren Verfahrensstufe erfolgen. Insbesondere kann das Polymermaterial 38' vor seiner Beschichtung auf den Magneten 36 mit CO₂ beladen werden. Nach noch einer weiteren Alternative kann der mit dem Polymermaterial 38' beschichtete Magnet 36 mit CO₂ beladen werden.

Nach noch einer weiteren, ebenfalls nicht dargestellten Verfahrensführung wird nicht der Permanentmagnet 36 sondern die Magnettasche 34 des Rotorkerns 32 mit dem Polymermaterial 38' (mit oder ohne CO₂-Beladung) beschichtet. Beispielsweise kann die Aufnahme/Tasche 34 mit einer Folie des Polymermaterials 38' ausgekleidet werden, ehe der Magnet 36 eingesetzt wird.

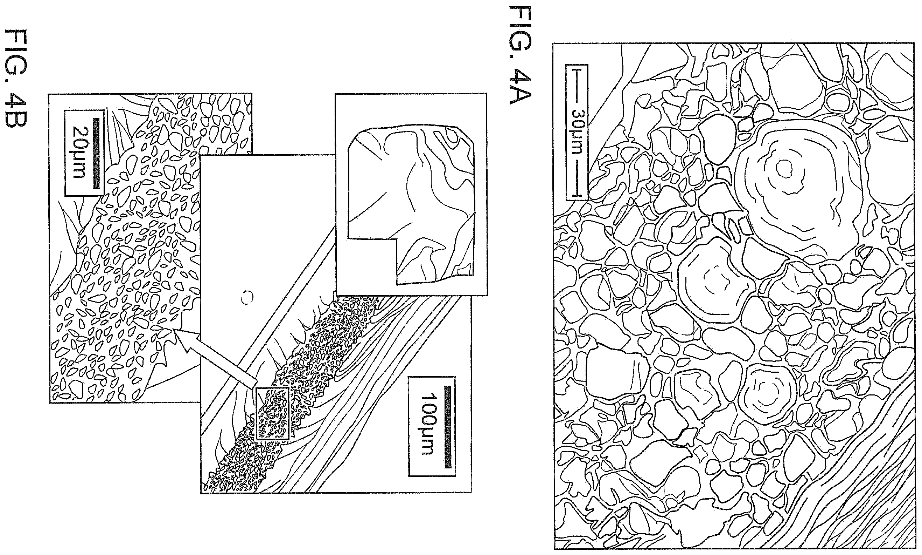

Figur 4 zeigt Aufnahmen geschäumter Polymerfolien mit Sicht auf eine nach dem Schäumvorgang erzeugte Schnittkante. Die Folien wurden jeweils bei einem Sättigungsdruck von 40 bar bei Raumtemperatur über eine Dauer von 24 Stunden mit CO₂ gesättigt. Die Aufschäumung erfolgte durch Erwärmung auf 145 °C. In Figur 4A ist eine geschäumte PPS-Folie (Ausgangsdicke 50 µm, LITE P®) und in Figur 4B eine geschäumte PSU-Folie (Ausgangsdicke 50 µm, LITE U®) gezeigt.

Es ist erkennbar, dass beide Folien nach dem Aufschäumvorgang eine Schaumstruktur mit Porengrößen im Mikrometer-Bereich aufweisen. Zudem ist erkennbar, dass in beiden Fällen die Oberflächen der geschäumten Folien eine geschlossene raue Oberfläche aufweisen.

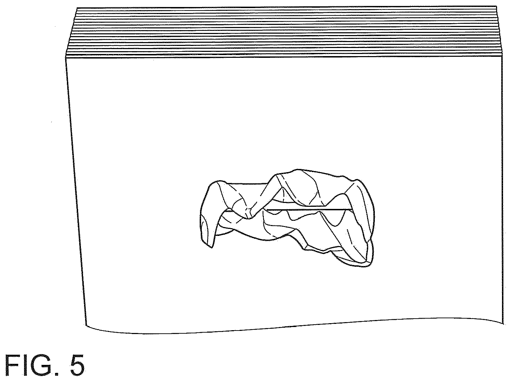

Figur 5 zeigt ein Blechpaket mit Kavität, welches labormodellartig die Magnetasche eines Rotors darstellt. In die Tasche wurde ein Magnet mit einfach umwickelter PPS-Folie (LITE P®) eingeführt, so dass die Folie an beiden Enden (an beiden Öffnungen der Magnettasche) deutlich übersteht. Der Magnet hingegen, schließt bündig mit dem Blechpaket ab. Dieser Aufbau wurde für 3 h mit CO₂ bei 50 bar gesättigt. Der Druck wurde innerhalb von 30 Sekunden abgelassen und das Blechpaket mit Magnet und PPS-Folie bei 180°C für 9 min expandiert. Durch das Aufschäumen der Folie wird der Magnet von der Folie teilweise verdeckt und ist daher nur schwer zu erkennen.

Für alle Versuche wurden die bereits erwähnten LITE®-Folien eingesetzt.

Es wurden weitere Versuche mit PPS-Folien (100 µm und 40 µm) und PEEK-Folien (LITE-K®) (50 µm) durchgeführt, die einfach oder zweifach um Permanentmagnete gewickelt wurden und für 3 oder 16 Stunden mit CO₂ (50 bar) gesättigt wurden, ehe sie in Taschen von Blechpaketen eingebracht wurden. Das Aufschäumen erfolgte in einem heißen Paraffinölbad bei 150 oder 180 °C. Die Blechpakete mit den aufgeschäumten Magnetverbindungen wurden erst aus dem Ölbad entnommen, nachdem keine Blasenbildung infolge entweichendem CO₂ mehr erkennbar war. Dies dauerte jeweils etwa 9 Minuten.

PPS zeigte sowohl nach 3 h als auch nach 16 h CO₂-Sättigung (50 bar) ein sehr starkes Aufschäumen in Verbindung mit einer großen Volumenzunahme, die zu einem starken Halt der Magnete in den Blechpaketen führte. Dabei war bei einer Ölbadtemperatur von 180 °C ein etwas stärkeres Aufschäumen zu beobachten als bei 150 °C. Bei beiden Temperaturen entstand eine kontinuierliche raue Deckschicht der freiliegenden Polymerbereiche. PEEK zeigte bei 16 h Kohlendioxid-Sättigung und bei einer Aufschäumtemperatur von 150 °C ein mäßiges aber vollständiges Aufschäumen. Dabei bildete sich eine durchgehende glatte Deckschicht aus. Bei einer Sättigungsdauer von 3 h und einer Aufschäumtemperatur von 180 °C zeigte das PEEK nur ein unvollständiges Aufschäumen unter Ausbildung einer ebenfalls durchgehenden glatten Deckschicht.

### Bezugszeichenliste

- 10: elektrische Maschine / Elektromotor
- 12: Gehäuse
- 14: Luftspalt

- 20: Stator
- 22: Statorkern (Blechpaket)

- 30: Rotor
- 32: Rotorkern (Blechpaket)
- 34: Magnettasche / Magnetaufnahme
- 36: Permanentmagnet
- 38: Verbindungsmaterial / aufgeschäumtes Polymermaterial
- 38': aufschäumbares Polymermaterial

## Patentansprüche

1. Elektrische Maschine (10), umfassend einen Stator (20) mit einem Statorkern (22) und einen Rotor (30) mit einem Rotorkern (32), wobei der Stator- und/oder der Rotorkern (22, 32) eine Mehrzahl von Magnettaschen (34) umfasst, in welchen jeweils zumindest ein Permanentmagnet (36) angeordnet und mit dem Stator- und/oder dem Rotorkern (22, 32) über ein Verbindungsmaterial verbunden ist, **wobei** das Verbindungsmaterial ein aufgeschäumtes Polymermaterial (38) umfasst, **dadurch gekennzeichnet, dass** eine äußere Oberfläche des aufgeschäumten Polymermaterials (38) als nicht-poröse Deckschicht ausgebildet ist.

2. Elektrische Maschine (10) nach Anspruch 1, wobei das aufgeschäumte Polymermaterial (38) hergestellt ist durch Aufschäumen eines aufschäumbaren Polymermaterials (38') innerhalb der Magnettaschen (34) in einem zusammengefügten Zustand der Permanentmagnete (36) mit dem Stator- und/oder Rotorkern (22, 32).

3. Elektrische Maschine (10) nach Anspruch 1 oder 2, wobei eine Reibschlussverbindung und/oder eine Klebeverbindung zwischen den Permanentmagneten (36) und dem Stator- und/oder dem Rotorkern (22, 32) besteht.

4. Elektrische Maschine (10) nach einem der vorhergehenden Ansprüche, wobei das aufgeschäumte Polymermaterial (38) ein Hochtemperaturpolymer ist, vorzugsweise ausgewählt aus der Gruppe bestehend aus Polyphenylensulfid (PPS), Polyethersulfon (PES), Polyetherimid (PEI), Polysulfon (PSU), Polyetheretherketon (PEEK), Cycloolefine-Copolymere (COC), Polyacrylnitril (PAN), Acrylnitril-Butadien-Styrol-Copolymeren (ABS), Polycarbonaten (PC), Fluorpolymere, Polystyrole sowie Derivate, Mischungen und Copolymere von diesen.

5. Elektrische Maschine (10) nach einem der vorhergehenden Ansprüche, wobei das aufgeschäumte Polymermaterial (38) ein Thermoplast ist.

6. Elektrische Maschine (10) nach einem der vorhergehenden Ansprüche, wobei die Mehrzahl von Magnettaschen (34) als Langlöcher im Stator- und/oder Rotorkern (22, 32) ausgebildet sind, welche sich in axialer Richtung erstrecken und in Richtung einer radialen Umlauffläche des Stator- und/oder der Rotorkerns (22, 32) geschlossen sind.

7. Verfahren zur Herstellung einer elektrischen Maschine (10) nach einem der Ansprüche 1 bis 6, wobei
a1) ein Permanentmagnet (36) zumindest bereichsweise mit einem aufschäumbaren Polymermaterial (38') beschichtet wird und
b1) der mit dem Polymermaterial (38') beschichtete Permanentmagnet (36) in eine Magnettasche (34) des Stator- und/oder Rotorkerns (22, 32) eingebracht wird
oder
a2) eine Magnettasche (34) des Stator- und/oder Rotorkerns (22, 32) zumindest bereichsweise mit einem aufschäumbaren Polymermaterial (38') beschichtet wird und
b2) ein Permanentmagnet (36) in die mit dem Polymermaterial (38') beschichtete Magnettasche (34) des Stator- und/oder Rotorkerns (22, 32) eingebracht wird,
und
c) das Polymermaterial (38') mit einem gasförmigen Treibmittel unter Druck über eine vorbestimmte Dauer beaufschlagt wird, sodass das Treibmittel sich in dem Polymermaterial (38') löst, wobei dieser Schritt c) vor oder nach Schritt a1) bzw. a2) oder nach Schritt b1) bzw. b2) durchgeführt wird,
und
d) eine Phasenseparation des Treibmittels und des Polymermaterials durch Druckminderung und Temperaturerhöhung ausgelöst wird, sodass sich ein aufgeschäumtes Polymermaterial (38) ausbildet, das über eine nicht-poröse Deckschicht verfügt.

8. Verfahren nach Anspruch 7, wobei das Treibmittel ein Inertgas ist, insbesondere Kohlendioxid oder Stickstoff.

9. Verfahren nach einem der Ansprüche 7 bis 8, wobei das Beschichten des Permanentmagneten (36) oder der Magnettasche (34) mit dem aufschäumbaren Polymermaterial (38') in Schritt a1) bzw. a2) durch Applikation einer Folie des aufschäumbaren Polymermaterials (38'), oder durch Spritzguss einer Schmelze des aufschäumbaren Polymermaterials (38') oder durch Tauchen in eine Lösung des aufschäumbaren Polymermaterials (38') oder durch ein Elektrospray-Verfahrens mit einer Lösung des Polymermaterials (38') erfolgt.

10. Verfahren nach einem der Ansprüche 7 bis 9, wobei in Schritt c) das Lösen des Treibmittels in dem Polymermaterial (38') zumindest bis 80%, insbesondere zumindest bist 90 %, der unter den gegebenen Bedingungen bestehenden Sättigungsgrenze erfolgt.

## Claims

1. Electrical machine (10), comprising a stator (20) having a stator core (22) and a rotor (30) having a rotor core (32), wherein the stator core and/or the rotor core (22, 32) comprises a plurality of magnet pockets (34) in each of which at least one permanent magnet (36) is disposed and is connected by a connecting material to the stator core and/or the rotor core (22, 32), wherein the connecting material comprises a foamed polymer material (38), **characterized in that** an outer surface of the foamed polymer material (38) is formed as a non-porous top layer.

2. Electrical machine (10) according to Claim 1, wherein the foamed polymer material (38) is produced by foaming a foamable polymer material (38') within the magnet pockets (34) in an assembled state of the permanent magnets (36) with the stator core and/or rotor core (22, 32).

3. Electrical machine (10) according to Claim 1 or 2, wherein there is a frictional connection and/or an adhesive connection between the permanent magnets (36) and the stator core and/or the rotor core (22, 32).

4. Electrical machine (10) according to any of the preceding claims, wherein the foamed polymer material (38) is a high-temperature polymer preferably selected from the group consisting of polyphenylene sulfide (PPS), polyether sulfone (PES), polyetherimide (PEI), polysulfone (PSU), polyetheretherketone (PEEK), cycloolefin copolymers (COC), polyacrylonitrile (PAN), acrylonitrile-butadiene-styrene copolymers (ABS), polycarbonates (PC), fluoropolymers, polystyrenes and also derivatives, mixtures and copolymers of these.

5. Electrical machine (10) according to any of the preceding claims, wherein the foamed polymer material (38) is a thermoplastic material.

6. Electrical machine (10) according to any of the preceding claims, wherein the plurality of magnet pockets (34) are formed as elongated holes in the stator core and/or rotor core (22, 32), these holes extending in the axial direction and being closed in the direction of a radial circumferential surface of the stator core and/or the rotor core (22, 32).

7. Method for producing an electrical machine (10) according to any of Claims 1 to 6, wherein
a1) a permanent magnet (36) is coated at least partly with a foamable polymer material (38') and
b1) the permanent magnet (36) coated with the polymer material (38') is inserted into a magnet pocket (34) of the stator core and/or rotor core (22, 32) or
a2) a magnet pocket (34) of the stator core and/or rotor core (22, 32) is coated at least partly with a foamable polymer material (38') and
b2) a permanent magnet (36) is inserted into the magnet pocket (34), coated with the polymer material (38'), of the stator core and/or rotor core (22, 32),
and
c) the polymer material (38') is exposed to a gaseous blowing agent under pressure over a predetermined time, so that the blowing agent dissolves in the polymer material (38'), with this step c) being carried out before or after step a1) and/or a2) or after step b1) and/or b2),
and
d) phase separation of the blowing agent and the polymer material initiated by pressure reduction and temperature increase, to form a foamed polymer material (38) which possesses a non-porous top layer.

8. Method according to Claim 7, wherein the blowing agent is an inert gas, more particularly carbon dioxide or nitrogen.

9. Method according to either of Claims 7 and 8, wherein the coating of the permanent magnet (36) or of the magnet pocket (34) with the foamable polymer material (38') in step a1) and/or a2) takes place by application of a foil of the foamable polymer material (38'), or by injection moulding of a melt of the foamable polymer material (38'), or by immersion in a solution of the foamable polymer material (38'), or by an electrospray method with a solution of the polymer material (38').

10. Method according to any of Claims 7 to 9, wherein the dissolving of the blowing agent in the polymer material (38') in step c) takes place at least up to 80%, more particularly at least up to 90%, of the saturation limit under the prevailing conditions.

## Revendications

1. Machine électrique (10), comprenant un stator (20) pourvu d'un noyau de stator (22) et un rotor (30) pourvu d'un noyau de rotor (32), le noyau de stator et/ou de rotor (22, 32) comportant une pluralité de poches à aimant (34) dans lesquelles au moins un aimant permanent (36) est respectivement disposé et relié au noyau de stator et/ou de rotor (22, 32) par le biais d'un matériau de liaison, le matériau de liaison comprenant un matériau polymère expansé (38), **caractérisée en ce qu'**une surface extérieure du matériau polymère expansé (38) est réalisée sous la forme d'une couche de recouvrement non poreuse.

2. Machine électrique (10) selon la revendication 1, le matériau polymère expansé (38) étant produit par expansion d'un matériau polymère expansible (38') à l'intérieur des poches à aimant (34) dans un état assemblé des aimants permanents (36) avec le noyau de stator et/ou de rotor (22, 32).

3. Machine électrique (10) selon la revendication 1 ou 2, une liaison par friction et/ou une liaison par collage étant établie entre les aimants permanents (36) et le noyau de stator et/ou de rotor (22, 32).

4. Machine électrique (10) selon l'une des revendications précédentes, le matériau polymère expansé (38) étant un polymère à haute température, de préférence choisi dans le groupe composé de polysulfure de phénylène (PPS), de polyéther sulfone (PES), de polyétherimide (PEI), de polysulfone (PSU), de polyétheréthercétone (PEEK), de copolymère cyclo-oléfine (COC), de polyacrylonitrile (PAN), des copolymères acrylonitrile butadiène styrène (ABS), des polycarbonates (PC), des fluoropolymères, des polystyrènes ainsi que des dérivés, des mélanges et des copolymères de ceux-ci.

5. Machine électrique (10) selon l'une des revendications précédentes, le matériau polymère expansé (38) étant un thermoplastique.

6. Machine électrique (10) selon l'une des revendications précédentes, la pluralité de poches à aimant (34) étant réalisées sous la forme de trous oblongs dans le noyau de stator et/ou de rotor (22, 32), lesquels s'étendent dans le sens axial et sont fermés dans la direction d'une surface périphérique radiale du noyau de stator et/ou de rotor (22, 32).

7. Procédé de fabrication d'une machine électrique (10) selon l'une des revendications 1 à 6, selon lequel
a1) un aimant permanent (36) est revêtu d'un matériau polymère expansible (38') au moins dans certaines zones et
b1) l'aimant permanent (36) revêtu du matériau polymère (38') est introduit dans une poche à aimant (34) du noyau de stator et/ou de rotor (22, 32)
ou
a2) une poche à aimant (34) du noyau de stator et/ou de rotor (22, 32) est revêtue d'un matériau polymère expansible (38') au moins dans certaines zones et
b2) un aimant permanent (36) est introduit dans la poche à aimant (34) du noyau de stator et/ou de rotor (22, 32) revêtue du matériau polymère expansible (38') et
c) le matériau polymère (38') est chargé avec un agent moussant sous pression pendant une durée prédéfinie, de sorte que l'agent moussant se dissolve dans le matériau polymère (38'), cette étape c) étant exécutée avant ou après l'étape a1) ou a2) ou après l'étape b1) ou b2),
et
d) une séparation des phases de l'agent moussant et du matériau polymère est déclenchée par une réduction de la pression et une augmentation de la température, de sorte qu'il se forme un matériau polymère expansé (38) qui dispose d'une couche de recouvrement non poreuse.

8. Procédé selon la revendication 7, l'agent moussant étant un gaz inerte, notamment du dioxyde de carbone ou de l'azote.

9. Procédé selon l'une des revendications 7 ou 8, le revêtement de l'aimant permanent (36) ou de la poche à aimant (34) avec le matériau polymère expansible (38') à l'étape a1) ou a2) étant effectué par application d'un film du matériau polymère expansible (38') ou par moulage par injection d'une masse fondue du matériau polymère expansible (38') ou par immersion dans une solution du matériau polymère expansible (38') ou par un procédé d'atomisation électrique avec une solution du matériau polymère expansible (38').

10. Procédé selon l'une des revendications 7 à 9, la dissolution de l'agent moussant dans le matériau polymère (38') à l'étape c) s'effectuant au moins jusqu'à 80 %, notamment au moins jusqu'à 90 % de la limite de saturation existante sous les conditions en présence.
